# EUROPEAN PATENT APPLICATION

(11) **EP 1 411 280 A1**
(43) Date of publication of application: **21.04.2004**
(21) Application number: 01951993.3
(22) Date of filing: 24.07.2001
(51) Int. Cl.: F16J 12/00

(54) **PRESSURIZED CONTAINER**

(71) Applicant: Sugimura, Nobuyuki, Shizuoka-shi, Shizuoka 424-0876 (JP)
(72) Inventor: Sugimura, Nobuyuki, Shizuoka-shi, Shizuoka 424-0876 (JP)
(74) Representative: Weise, Reinhard, Dipl.-Ing.
(86) International application number: PCT/JP2001/006372
(87) International publication number: WO 2003/010447

(57) **Abstract**

A receiving portion (11) having a pressure receiving-surface (11F) is provided in the through hole (10) of a container body (1), wherein the pressure-receiving surface has a tapered pressure-receiving surface (11A) and an outer receiving-pressure-regulating R(rounded) surface (11B) continuous to the forward end of the tapered pressure-receiving surface (11A). A supply/discharge tube (13) being inserted into the through hole is provided with a flange portion (14) having a pressurizing surface (14F) which is provided with a tapered pressurizing surface (14A) coming into face-contact with the tapered pressure-receiving surface.

## Description

### Technical Field

The present invention relates to a pressurized container, such as an accumulator, and more particularly to a pressurizing surface of a supply/discharge tube of an accumulator and a pressure-receiving surface of a container body.

### Background Art

A bottom portion of a container body of an accumulator is connected to a hydraulic circuit via a supply/discharge tube to and from which a pressure liquid is supplied and discharged. This supply/discharge tube is fitted in a through hole of the bottom portion, and a flange portion of the supply/discharge tube is engaged with a stepped receiving portion formed in the through hole.

When a liquid pressure in the accumulator increases due to the fluctuation of a liquid pressure in the hydraulic circuit, a large force is applied to the flange portion of the supply/discharge tube. This causes a large load to be imparted to the stepped receiving portion engaged with the flange portion.

However, since a pressure-receiving surface of the stepped receiving portion engaged with the flange portion is shaped in the form of a substantially horizontal surface, a load on the flange portion is received by this horizontal pressure-receiving surface.

Therefore, a large tensile stress occurs in an angular section of an inner lower surface of the flange portion and in an outer angular section of the stepped receiving portion, on both of which a tensile force is exerted, so that a fatigue failure occurs therein.

Between the container body and supply/discharge tube, an O-ring is provided, and the leakage of the pressure liquid from a clearance between the container body and supply/discharge tube is thereby prevented. When the clearance is widened to a level not lower than a predetermined level, a part of this O-ring projects there into, and is torn off, so that the leakage of the pressure liquid occurs. In order to prevent the leakage of the pressure liquid, it is necessary that the container body and supply/discharge tube be processed with a tolerance permitting the width of the clearance there between to decrease.

However, processing these parts with a tolerance permitting the width of the clearance there between to decrease is difficult, and a processing efficiency is not high.

Moreover, since the pressure-receiving surface of the stepped receiving portion is horizontal, the central axis of the supply/discharge tube and the central axis of the container body are not aligned with each other in some cases. This causes in some cases a partial load to be imparted to the pressure-receiving surface, a maximum tensile stress to increase, and the destruction of the container body and supply/discharge tube to occur.

In view of these facts, the present invention aims at preventing the occurrence of a fatigue failure of a pressurized container. Another object is to prevent the tear-off of an O-ring in such a container ever when setting a processing tolerance large.

### Disclosure of the Present Invention

The present invention relates to a pressurized container formed by providing a through hole in a pressure-receiving member, fitting a pressurizing member in the through hole, and engaging a pressurizing surface of a flange portion of the pressurizing member with a pressure-receiving surface of a pressure-receiving portion of the through hole, the features of the invention residing in that the pressure-receiving surface is provided with an outwardly and upwardly inclining tapered pressure-receiving surface, and an outer receiving-pressure-regulating R(rounded) surface continuing to a front end of the tapered pressure-receiving surface, the pressurizing surface being provided with a tapered pressurizing surface which face-contacts with the tapered pressure-receiving surface, and an inner pressure-regulating R(rounded) surface continuing to a rear end of the tapered pressurizing surface. This regulating R(rounded) surface may be provided on either the pressure-receiving surface or the pressurizing surface.

### Brief Description of the Drawings

Fig. 1 is a longitudinal sectional view showing a first embodiment of the present invention;
Fig. 2 is an enlarged view of a principal portion of what is shown in Fig. 1;
Fig. 3 is a longitudinal sectional view showing a prior art example and corresponding to Fig. 2;
Fig. 4 to Fig. 7 show a second embodiment of the present invention, which illustrate the results of experiments conducted so as to determine a maximum tensile stress with the radii of the outer receiving-pressure-regulating R (rounded) surfaces of samples varied;
Fig. 8 to Fig. 11 show a third embodiment of the present invention, which illustrate the results of experiments conducted so as to determine a maximum tensile stress by setting the radii of the outer receiving-pressure-regulating R(rounded) surfaces of samples equal, and varying the widths of the tapered pressure-receiving surfaces thereof.

### Best Mode for Carrying Out the Invention

In the prior art accumulator, the pressure-receiving surface is formed with an area which does not cause plastic deformation thereof to occur, by calculating a surface pressure. In order to prevent stress concentration from occurring, forming the pressurizing surface and the pressure-receiving surface, which are engaged with each other, as R(rounded) surfaces is being devised but it is difficult to form these R(rounded) surfaces precisely in accordance with what was designed with a processing tolerance being minimized.

Therefore, the inventor of the present invention conceived that each of the above-mentioned two surfaces be shaped in the form of a inclined surface. Namely, the pressure-receiving surface is inclined in the outwardly upward direction, and the pressurizing surface in the inwardly downward direction so that the latter surface corresponds to the former surface, these two surfaces being thereby face-contacted with each other. Since these surfaces are formed in this manner, a force to have the pressurizing surface slide down along the pressure-receiving surface is always exerted on the pressurizing surface. Therefore, the central axis of the supply/discharge tube and the central axis of the container body are always aligned with each other. As a result, a partial load is not imparted to the pressure-receiving surface, and a maximum tensile stress in the outer angular section and angular section of the inner lower surface decreased, compared with the conventional horizontal pressure-receiving surface. However, the maximum tensile stress is still too large.

Under the circumstances, it has been discovered that, when an outer receiving-pressure-regulating R(rounded) surface is provided on a front end of the inclined pressure-receiving surface, or when an inner pressure-regulating R (rounded) surface is provided on a rear end of the pressurizing surface, and also when such two regulating R (rounded) surfaces as mentioned above are provided, the maximum tensile stress greatly decreases.

The present invention has been made on the basis of this knowledge.

### First Embodiment:

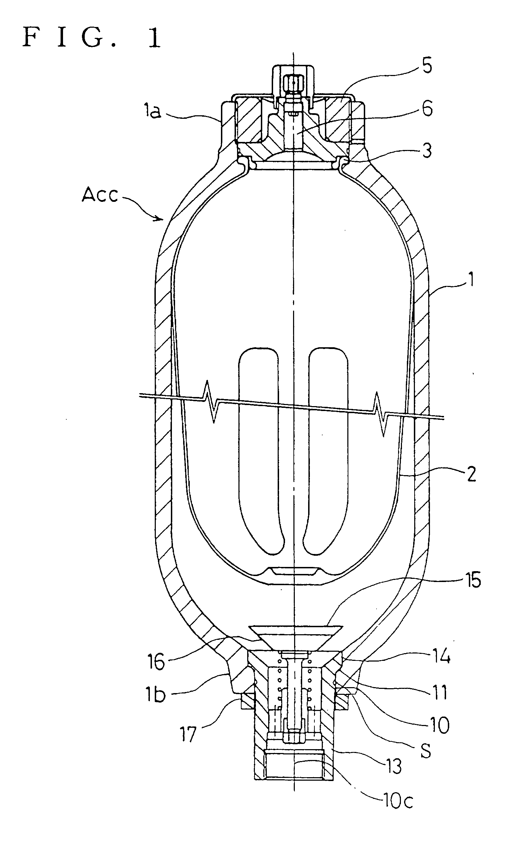

This embodiment of the present invention will be described with reference to Fig. 1 to Fig. 3.

An accumulator Acc contains a bladder 2 in a container body 1. This bladder 2 is a pleated bladder, and creased so that the bladder is folded to a predetermined shape.

A flange 3 of this bladder 2 is engaged with an upper portion 1a of the container body 1 and fixed by a cover 5. The cover 5 is provided with a supply/discharge port 6 communicating with the interior of the bladder 2.

The container body 1 is provided at a bottom portion 1b thereof with a through hole 10, into which a supply/discharge tube 13 is inserted via an O-ring S. A flange portion 14 of the supply/discharge tube 13 is brought into pressure contact with a receiving portion 11 of the through hole 10.

A tapered pressure-receiving surface 11A of a pressure-receiving surface 11F of the receiving portion 11 is inclined in the outwardly upward direction, i.e., in the direction in which a front end thereof gradually leaves the central axis 10c of the supply/discharge tube 10. This angle θ of inclination is suitably selected from levels in a range of 30 degrees to 60 degrees, for example, the angle θ of inclination of 45 degrees is employed.

The front end of the tapered pressure-receiving surface 11A is formed with a diameter larger than that of a rear end thereof. This front end continues smoothly to an outer receiving-pressure-regulating R(rounded) surface 11B. The R(rounded) surface 11B is formed with a radius r1 larger than that of a chamfer formed by a regular mechanical processing operation, and, for example, 9 mm is employed as r1.

The rear end of the tapered pressure-receiving surface 11A continues smoothly to the inner pressure-receiving R(rounded) surface 11C. This R(rounded) surface 11C is formed with a radius equal to or smaller than that r1 of the outer receiving-pressure-regulating R(rounded) surface 11B. The R(rounded) surface 11C is not necessarily as a R(rounded) surface, and may be shaped in the form of a tapered surface.

At a lower section of the flange portion 14 of the supply/discharge tube 13, a pressurizing portion is provided, and a tapered pressurizing surface 14A of a pressurizing surface 14F of the pressurizing portion is inclined in an inwardly downward direction, i.e. , in the direction in which the rear end thereof approaches the central axis 10c of the supply/discharge tube.

An angle β of this inclination is determined correspondingly to the angle θ of inclination of the pressure-receiving surface 11F so that both of the surfaces 11A, 14A can be surface-engaged with each other.

Therefore, the angle β of the inclination is selected from levels in a range of 30 degrees to 60 degrees, and, for example, 45 degrees is employed as the angle β of inclination.

When the angles β, θ of inclination are set to 45 degrees, the front end section and rear end section of the inclined surface come to have an equal angle, so that the mechanical processing of these sections becomes easy as compared with that in a case where these angles of inclination are set to some other levels.

The rear end section of the tapered pressurizing surface 14A is formed with a diameter smaller than that of the front end section thereof. The rear end of this surface 14A continues smoothly to the inner pressure-regulating R (rounded) surface 14B. This R(rounded) surface 14B is formed with a radius r2 which is larger than that of a chamfer formed by a regular mechanical processing operation, and, for example, 9 mm is employed as r2. This radius r2 is not necessarily set equal to the radius r1, and may be set, for example, smaller than r1.

The front end, i.e. a larger-diameter side end of the tapered pressurizing surface 11A continues smoothly to an outer pressurizing R(rounded) surface 14C. This R(rounded) surface 14C is formed with a radius equal to or smaller than that r2 of the inner pressure-regulating R(rounded) surface 14B. This surface 14C is not necessarily formed as a R(rounded) surface, and may be a tapered surface.

A poppet valve 16 having a cushion cup 15 is slidably supported on the supply/discharge tube 13. This supply/discharge tube 13 is fixed to the container body 1 by a nut 17.
The operation of this embodiment will now be described.

The accumulator Acc is connected to the hydraulic circuit (not shown) via the supply/discharge tube 13.

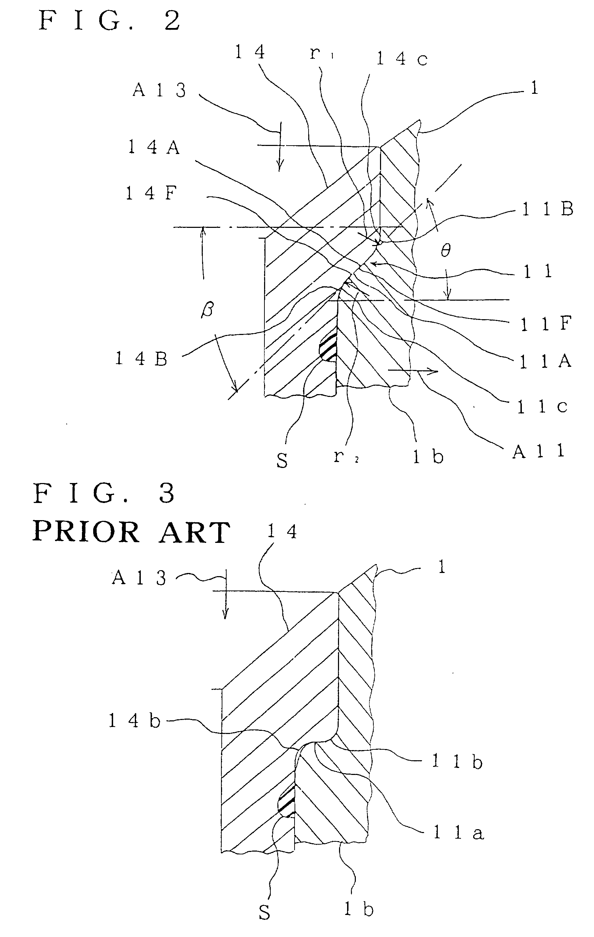

When the liquid pressure in the hydraulic circuit varies to cause the pressure in the container body 1 to increase, the supply/discharge tube 13 is pressed in the direction of an arrow A13, and the pressure-receiving surface 11F is pressed by the pressurizing surface 14F and receives a large load as shown in Fig. 2.

During this time, both of the tapered surfaces 11A, 14A are surface-engaged with each other. Therefore, the receiving portion 11 becomes ready to expand in the direction of an arrow All, while the pressurizing surface 14A becomes ready to slide along the pressure-receiving surface 11A. As a result, when an excessively large load is imparted to the receiving portion 11, this receiving portion 11 receives a force working in the direction of an arrow A11, i.e. an outwardly directed force, and is expanded diametrically so as to let the load go. This prevents the occurrence of stress concentration. Since the tapered pressurizing surface 14A is displaced along the tapered pressure-receiving surface 11A, the displacement of the tapered surface 14A works so that the central axis of the container body 1 is always aligned with the central axis 10c of the supply/discharge tube 13.

This can prevent a partial load from being imparted to the pressure-receiving surface, and a clearance in a seal portion at which the container body 1 and supply/discharge tube 13 are engaged each other becomes constant on a circumference thereof, so that a partiality of the width of this clearance is removed. Therefore, even when a fitting tolerance is set large, the projection of the O-ring S can be prevented.

### Experimental Example:

When a calculation of a tensile load in the accumulator in this embodiment was made by the finite-element method with a total load imparted to the flange portion set to 332,620 N/mm², a maximum tensile stress on the inner pressure-regulating R(rounded) surface 14B of the pressurizing surface 14F of the flange portion 14 was 106 N/mm², and a maximum tensile load on the outer receiving-pressure-regulating R(rounded) surface 11B of the pressure-receiving surface 11F of the receiving portion 11 was 212 N/mm².

On the other hand, when an analysis was made by the finite element method in a prior art example shown in Fig. 3, in which R(rounded) surfaces are provided so that the R(rounded) surfaces continue to both ends of a horizontal surface, with the same load as mentioned above imparted to the flange portion 14, a maximum tensile stress on the inner pressurizing R(rounded) surface 14b of the flange portion 14 was 259 N/mm², and a maximum tensile stress on the outer pressure-receiving R(rounded) surface 11b of the receiving portion was 288 N/mm².

As is clear from the above, it is understood that the respective maximum tensile stress occurring on the pressure-receiving surface and pressurizing surface decreases greatly in the present embodiment as compared with those in the prior art example.

### Second Embodiment:

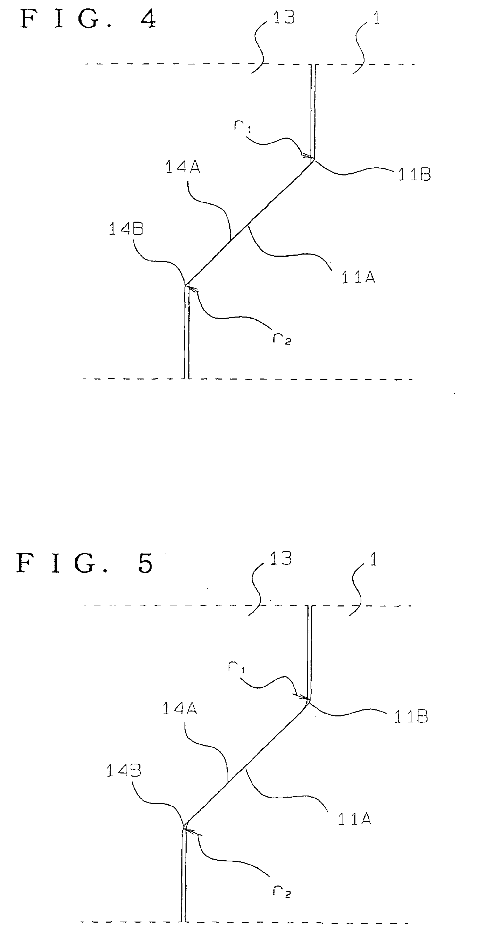

A second embodiment of the present invention will be described on the basis of Fig. 4 to Fig. 7.

This embodiment is an experimental example in which a calculation of a maximum tensile stress on each of the outer receiving-pressure-regulating R(rounded) surface 11B and the inner pressure-regulating R(rounded) surface 14B is made in accordance with the method shown in the first embodiment, by varying the radii r1, r2 of these surfaces 11B, 14B.

The radii r1, r2 of the pressure regulating R(rounded) surfaces 11B, 14B shown in Fig. 4 were 0.4 mm, a maximum tensile stress on the outer receiving-pressure-regulating R(rounded) surface 11B of the container body 1 in this case was 246 N/mm², and a maximum tensile stress on the inner pressure-regulating R(rounded) surface 14B of the supply/discharge tube 13 was 322 N/mm².

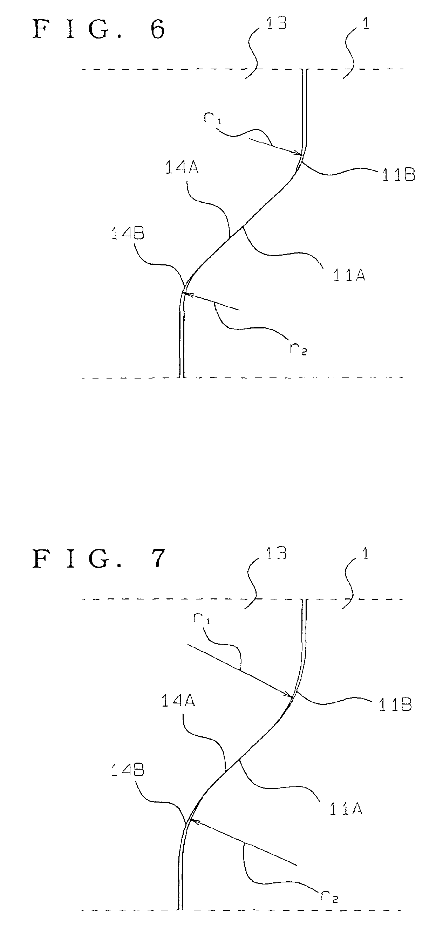

The radii r1, r2 of the pressure regulating R(rounded) surfaces 11B, 14B shown in Fig. 5 were 1.0 mm, a maximum tensile stress on the outer receiving-pressure-regulating R(rounded) surface 11B of the container body 1 in this case was 212 N/mm², and a maximum tensile stress on the inner pressure-regulating R(rounded) surface 14B of the supply/discharge tube 13 was 317 N/mm².

The radii r1, r2 of the pressure regulating R(rounded) surfaces 11B, 14B shown in Fig. 6 were 3.0 mm, a maximum tensile stress on the outer receiving-pressure-regulating R(rounded) surface 11B of the container body 1 in this case was 211 N/mm², and a maximum tensile stress on the inner pressure-regulating R(rounded) surface 14B of the supply/discharge tube 13 was 198 N/mm².

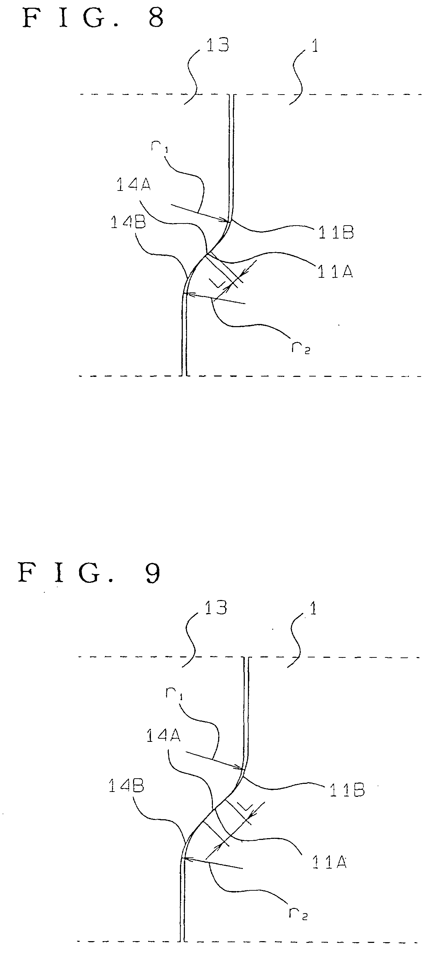

The radii r1, r2 of the pressure regulating R(rounded) surfaces 11B, 14B shown in Fig. 7 were 6.0 mm, a maximum tensile stress on the outer receiving-pressure-regulating R(rounded) surface 11B of the container body 1 in this case was 207 N/mm², and a maximum tensile stress on the inner pressure-regulating R(rounded) surface 14B of the supply/discharge tube 13 was 165 N/mm².

In view of the results of this experiment, it is understood that, in inverse proportion to the radii r1, r2, the maximum tensile stress tends to decrease, and that, when the radii r1, r2 are not smaller than 1 mm, the maximum tensile stress decreases greatly as compared with the case where the radii are 0.4 mm. This indicates that the radii r1, r2 are preferably 1 mm or more, especially between 1 mm to 9 mm is preferable.

### Third Embodiment:

A third embodiment of the present invention will be described with reference to Fig. 8 to Fig. 11.

This embodiment is an experimental example in which the radii r1, r2 of two regulating R(rounded) surfaces were fixed to 3 mm with the width L of tapered surfaces 11A, 14A varied, and in which a maximum tensile stress was calculated by the method shown in the experiments conducted in the first embodiment.

The width L of two tapered surfaces 11A, 14A shown in Fig. 8 was 2.0 mm, a maximum tensile stress on the outer receiving-pressure-regulating R(rounded) surface 11B of the container body 1 in this case was 244 N/mm², and a maximum tensile stress on the inner pressure-regulating R(rounded) surface 14B of the supply/discharge tube 13 was 236 N/mm².

The width L of two tapered surfaces 11A, 14A shown in Fig. 9 was 3.1 mm, a maximum tensile stress on the outer receiving-pressure-regulating R(rounded) surface 11B of the container body 1 in this case was 230 N/mm², and a maximum tensile stress on the inner pressure-regulating R(rounded) surface 14B of the supply/discharge tube 13 was 230 N/mm².

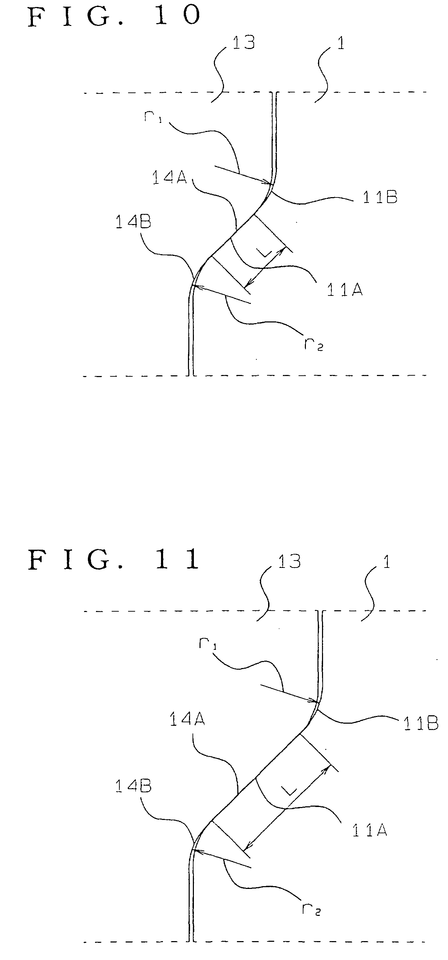

The width L of two tapered surfaces 11A, 14A shown in Fig. 10 was 4.1 mm, a maximum tensile stress on the outer receiving-pressure-regulating R(rounded) surface 11B of the container body 1 in this case was 217 N/mm², and a maximum tensile stress on the inner pressure-regulating R(rounded) surface 14B of the supply/discharge tube 13 was 210 N/mm².

The width L of two tapered surfaces 11A, 14A shown in Fig. 11 was 6.2 mm, a maximum tensile stress on the outer receiving-pressure-regulating R(rounded) surface 11B of the container body 1 in this case was 211 N/mm², and a maximum tensile stress on the inner pressure-regulating R(rounded) surface 14B of the supply/discharge tube 13 was 198 N/mm².

In view of the results of these experiments, it is understood that, in inverse proportion to the width L of the tapered surfaces 11A, 14A, the maximum tensile stress decreases, and that, in proportion to a ratio of the radii r1, r2 to the width L of the tapered surfaces, i.e. r/L, a maximum tensile stress tends to decrease. A value of this r/L is preferably determined to 1 and less, especially, to a level in the range of 1 to 0.5.

The present invention can be used not only for an accumulator but also for a pressurized container formed by making a through hole in a pressure-receiving member, fitting a pressurizing member in the through hole, and engaging a pressurizing surface of a flange portion of the pressurizing member with a pressure-receiving surface of a pressure-receiving portion of the through hole.

### Advantages of the Invention

Since the present invention is provided with tapered surfaces and regulating rounded surfaces continuing to the tapered surfaces, a maximum tensile stress can be reduced greatly as compared with that in the prior art example.

Since the tapered surfaces are provided, these surfaces work so that the central axis of the pressurizing member and the central axis of the pressure-receiving member are always aligned with each other. Therefore, the occurrence of a partial load on the pressure-receiving member can be prevented, and a clearance between seal portions where these two members contact becomes constant on the circumference thereof. Accordingly, a partiality of the width of this clearance is removed. Therefore, even when a fitting tolerance is set large, the projection of the O-ring can be prevented, so that the sealability of the pressurized container can be improved.

## Claims

1. A pressurized container formed by providing a pressure-receiving member with a through hole, fitting a pressurizing member in the through hole, engaging a pressurizing surface of a flange portion of the pressurizing member with a pressure-receiving surface of a pressure-receiving portion of the through hole, **characterized in that**:
the pressure-receiving surface is provided with an outwardly and upwardly inclining tapered pressure-receiving surface, and an outer receiving-pressure-regulating rounded surface continuing to a front end of the tapered pressure-receiving surface,
the pressurizing surface being provided with a tapered pressurizing surface which is surface-engaged with the tapered pressure-receiving surface.

2. A pressurized container formed by providing a pressure-receiving member with a through hole, fitting a pressurizing member in the through hole, engaging a pressurizing surface of a flange portion of the pressurizing member with a pressure-receiving surface of a pressure-receiving portion of the through hole, **characterized in that**:
the pressurizing surface being provided with a tapered pressurizing surface which is surface-engaged with the tapered pressure-receiving surface, and an inner pressure-regulating rounded surface continuing to a rear end of the tapered pressurizing surface,
the pressure-receiving surface is provided with an outwardly and upwardly inclining tapered pressure-receiving surface.

3. A pressurized container formed by providing a pressure-receiving member with a through hole, fitting a pressurizing member in the through hole, engaging a pressurizing surface of a flange portion of the pressurizing member with a pressure-receiving surface of a pressure-receiving portion of the through hole, **characterized in that**:
the pressure-receiving surface is provided with an outwardly and upwardly inclining tapered pressure-receiving surface, and an outer receiving-pressure-regulating rounded surface continuing to a front end of the tapered pressure-receiving surface,
the pressurizing surface being provided with a tapered pressurizing surface which is surface-engaged with the tapered pressure-receiving surface, and an inner pressure-regulating rounded surface continuing to a rear end of the tapered pressurizing surface.

4. A pressurized container according to any one of Claims 1 or 3, wherein the radius of the outer receiving-pressure-regulating rounded surface is 1 mm or more.

5. A pressurized container according to any one of Claims 2 or 3, wherein the radius of the inner pressure-regulating rounded surface is 1 mm or more.

6. A pressurized container according to Claim 3, wherein the radius of the outer receiving-pressure-regulating rounded surface and that of the inner pressure-regulating rounded surface are equal to each other.

7. A pressurized container according to Claim 3, wherein the radius of the outer receiving-pressure-regulating rounded surface and that of the inner pressure-regulating rounded surface are different from each other.

8. A pressurized container according to any one of Claims 1 or 2, wherein a rounded surface or a tapered surface continues to a rear end of the tapered pressure-receiving surface.

9. A pressurized container according to any one of Claims 2 or 3, wherein a rounded surface or a tapered surface continues to a front end of the tapered pressurizing surface.

10. A pressurized container according to any one of Claims 1 or 3, wherein an angle of inclination of the tapered pressure-receiving surface is selected from levels in the range of 30 degrees to 60 degrees.

11. A pressurized container according to any one of Claims 2 or 3, wherein an angle of inclination of the tapered pressurizing surface is selected from levels in the range of 30 degrees to 60 degrees.

12. A pressurized container according to any one of Claims 1,2, or 3, wherein the pressure-receiving member is a bottom portion of the container body of the accumulator, the pressurizing member being a flange portion of a supply/discharge tube.

13. A pressurized container according to Claim 12, wherein an O-ring is provided between a through hole on the lower side of the pressure-receiving surface and the supply/discharge tube.
